# EUROPÄISCHE PATENTSCHRIFT

(11) **EP 1 458 455 B1**
(45) Veröffentlichungstag und Bekanntmachung des Hinweises auf die Patenterteilung: **22.11.2006**
(21) Anmeldenummer: 01991669.1
(22) Anmeldetag: 22.12.2001
(51) Int. Cl.: B01D 45/08, B01D 45/16

(54) **HALTEPROFIL FÜR LAMELLEN, MODULARE HALTEPROFILEINHEIT UND EINE SOLCHE AUFWEISENDE ABSCHEIDE-, LICHTREDUZIER- ODER STRÖMUNGSLEITEINHEIT**
HOLDING PROFILE FOR LAMELLAE, MODULAR HOLDING PROFILE UNIT, AND A SEPARATING, LIGHT-REDUCING OR FLOW-CONDUCTING UNIT CONTAINING THE SAME
PROFILE DE RETENUE POUR LAMELLES, UNITE DE PROFILE DE RETENUE MODULAIRE ET UNITE DE SEPARATION, DE REDUCTION DE LUMIERE OU DE CONDUCTION DE FLUX AINSI EQUIPEE

(43) Veröffentlichungstag der Anmeldung: 22.09.2004
(73) Patentinhaber: Munters Euroform GmbH, 52072 Aachen (DE)
(72) Erfinder: KAISER, Roman, 52072 Aachen (DE); Marshall, Terry, Norton, Stockton on Tees, TS20 1GD (GB)
(74) Vertreter: Hauck, Graalfs, Wehnert, Döring, Siemons
(86) Internationale Anmeldenummer: PCT/DE2001/004895
(87) Internationale Veröffentlichungsnummer: WO 2003/055574

(56) Entgegenhaltungen:
- EP-A- 0 206 204
- DE-A- 3 137 795
- DE-C- 4 317 506
- DE-U- 8 702 512

## Beschreibung

Die vorliegende Erfindung betrifft ein Halteprofil für Lamellen mit Abscheide-, Lichtreduzier-, Strömungsleit- u. dgl. Funktionen.

Derartige Lamellen finden beispielsweise als Tropfenabscheiderprofile Verwendung und haben somit Abscheidefunktionen, da sie Flüssigkeitspartikel aus Gasströmen abscheiden. Sie können aber auch andere Abscheidefunktionen übernehmen, beispielsweise die Abscheidung von Staubpartikeln aus Gasströmen. Ein weiteres Einsatzgebiet von derartigen Lamellen betrifft Strömungsleit- oder Strömungsbegradigungsfunktionen. Ferner können solche Lamellen für Lichtreduzierzwecke u. dgl. eingesetzt werden. Einsatzgebiete sind hierbei beispielsweise Lichtfallen.

Die vorliegende Erfindung bezieht sich auf die Halterung von derartigen Lamellen, die parallel zueinander und im Abstand voneinander angeordnet werden, um ihre Funktionen zu erfüllen, wobei sie hierfür seitlich gehaltert werden. Für diese Zwecke sind Halteeinrichtungen entwickelt worden, bei denen es sich mehr oder weniger um für den jeweiligen Anwendungsfall konzipierte Spezialkonstruktionen handelt, die sich durch die Profilgeometrien und die Abstände der Profile zueinander unterscheiden.

Der vorliegenden Erfindung liegt die Aufgabe zugrunde, eine modular verwendbare Halteeinrichtung für derartige Lamellen zu schaffen, die sich durch einen besonders einfachen Aufbau und eine besonders einfache Handhabbarkeit bei vielseitiger Einsetzbarkeit auszeichnet.

Diese Aufgabe wird erfindungsgemäß durch ein Halteprofil gemäß Anspruch 1 gelöst.

Das erfindungsgemäß ausgebildete Halteprofil kann als beliebig langes Profil ausgebildet sein, je nach Anwendungsfall. Es kann darüber hinaus durchtrennt (verkürzt) werden, so dass es an spezielle Einbaugegebenheiten anpassbar ist. Das Profil läßt sich als modulare Einheit mit weiteren modularen Profileinheiten verbinden, so daß auf einfache Weise ein Gesamtprofil einer gewünschten Länge herstellbar ist. Durch Aneinandersetzen von diversen Profileinheiten kann somit nach Art eines Baukastensystems vom Anwender selbst mit Hilfe des erfindungsgemäßen Halteprofils ein Lamellenpaket gewünschter Größe zusammengestellt werden, so daß somit eine sehr gute Anpassung an die jeweiligen Einbaugegebenheiten erreichbar ist. Eine weitere Anpassungsmöglichkeit besteht darin, daß Halteprofile mit geeigneten Trennwerkzeugen durchtrennt werden, wie vorstehend angegeben, um gewünschte Längenmaße der Profile und damit gewünschte Lamellenpackungsgrößen zu erreichen.

Die Fixierung der Lamellen am Halteprofil kann aufgrund der erfindungsgemäß vorgesehenen Ausgestaltung des Halteprofils auf einfache Weise erfolgen und somit ebenfalls vom Anwender selbst durchgeführt werden. Um dies zu ermöglichen, sind am Halteprofil auf der Innenseite der Seitenwände und/oder Bodenwand des Halteprofils Aufnahmeabschnitte zum Fixieren der Lamellen vorgesehen. Zusätzlich weist das Halteprofil vorzugsweise an der Innenseite seiner Bodenwand einen nach innen vorstehenden Stützabschnitt auf, der zum Abstützen des mittleren Bereiches der Lamellen dient und diese im Abstand von der Steginnenseite positioniert. Zwischen Bodenwandinnenseite und dem Lamellenrand verbleibt daher ein Freiraum, um beispielsweise einen seitlichen Abfluß der abgeschiedenen Flüssigkeit zu ermöglichen. Diese Aufnahmeabschnitte und der Stützabschnitt sind so über die Länge des Halteprofils angeordnet, daß am Halteprofil eine Vielzahl von Lamellen in abgestützter Weise fixiert werden kann, wobei die Zahl der Lamellen pro Halteprofil von der Länge des Halteprofils und den gewünschten Abständen zwischen den Lamellen abhängig ist.

Bei der Zusammenstellung von geeigneten Lamellenpaketen werden die Lamellen an ihren beiden Stirnrändern in je einem Halteprofil fixiert. Wie bereits erwähnt, lassen sich somit auf einfache Weise Lamellenpakete einer gewünschten Länge herstellen, die durch die Halteprofile an beiden Seiten entsprechend stabilisiert sind. Die Halteprofile können so ausgebildet sein, daß sie an entsprechenden Trageinrichtungen fixiert werden können. Hierzu können die Halteprofile geeignete Befestigungseinrichtungen aufweisen.

Die Halteprofile können ferner mit geeigneten Seiten/Abschlußprofilen, die sich quer zu ihrer Längsrichtung erstrecken, verbunden werden, so daß sich Lamellenpakete ergeben, die ringsum von Profilen eingeschlossen sind. Sämtliche Teile können baukastenförmig zusammengesetzt werden, insbesondere vom Anwender selbst.

Eine einfache Möglichkeit des Fixierens der Lamellen an den Halteprofilen, des Fixierens von mehreren Halteprofilen aneinander und des Fixierens von Abschlußprofilen an den Halteprofilen besteht im Aneinanderstecken dieser Elemente, wobei sämtliche Fixier/Verbindungseinrichtungen als Steckverbindungselemente ausgebildet sind. Hierdurch läßt sich auf besonders einfache und rasche Weise ein geeignetes Lamellenpaket mit Halteprofilen einer gewünschten Länge zusammenbauen. Zusätzlich kann eine Verschraubung der Profile miteinander erfolgen.

Eine Ausführungsform der Erfindung sieht vor, daß die Aufnahmeabschnitte der Seitenwände und/oder Bodenwand des Halteprofils in gleichen Abständen angeordnet sind. Auf diese Weise wird der Modulcharakter des erfindungsgemäßen Haltesystems weitergeprägt. Dies schließt nicht aus, daß auch ungleiche Abstände vorgesehen sein können, falls gewünscht. Eine gewünschte Verkürzung der Halteprofile ist durch Durchtrennen zwischen benachbarten Aufnahmeabschnitten möglich.

Wie vorstehend bereits erwähnt, werden die Lamellen so in die Halteprofile eingesetzt, daß sie sich nicht bis zur Innenseite der Seiten/Bodenwand des Halteprofils erstrecken und zwischen Lamellenende und der Innenseite der Seiten/Bodenwand ein Freiraum (Spalt) verbleibt, der beispielsweise das Abfließen von Flüssigkeiten, Entfernen von Feststoffpartikeln etc. ermöglicht. Um die Aufrechterhaltung eines derartigen Spaltes sicherzustellen, weisen die Aufnahmeabschnitte vorzugsweise einen Anschlag auf, der eine Aufnahme der Lamellen nur bis zu einer der Spitze des Stützabschnittes entsprechenden Tiefe ermöglicht. Auf diese Weise werden die Lamellen beim Einsetzen in das Halteprofil automatisch in die richtige Position gebracht.

Was die Ausbildung der Aufnahmeabschnitte selbst anbetrifft, so sind diese zweckmäßigerweise je von zwei leicht schrägen Wänden und einem dazwischen befindlichen Aufnahmespalt gebildet. Die Endbereiche der Lamellen, die in der Regel wulstförmig ausgebildet sind, können in diesen Aufnahmespalt eingesetzt werden, und je nach Ausgestaltung der Verbindung, dort fixiert werden, beispielsweise durch Festklemmen, Verkleben, Verhaken etc.. Bei einer Ausbildung als Steckverbindung weist eine Wand des Aufnahmeabschnittes vorzugsweise auf ihrer Innenseite einen schräg nach innen und hinten verlaufenden Vorsprung (Rasthaken) auf, der beim Einsetzen der Lamelle in elastischer Weise seitlich verschoben wird und für das Festklemmen des Lamellenrandes sorgt.

Was die Ausbildung des etwa mittig an der Halteprofilbodenwand in Längsrichtung derselben angeordneten Sützabschnittes anbetrifft, so ist dieser vorzugsweise in der Form von einzelnen unterbrochenen Stegen ausgebildet, auf denen sich die Lamellenränder abstützen. Bei einer anderen Ausführungsform der Erfindung ist der Stützabschnitt als im wesentlichen in Längsrichtung durchlaufende Rippe ausgebildet. Diese Rippe weist zweckmäßigerweise Ausnehmungen auf, um für einen Abfluß der abgeschiedenen Flüssigkeit etc. zu sorgen.

Für bestimmte Anwendungsfälle ist es zweckmäßig, im Abstand vom ersten Stützabschnitt einen zweiten Stützabschnitt am Steg des Halteprofils vorzusehen. Eine solche Ausführungsform ist insbesondere dann von Vorteil, wenn die Lamellen Nasen aufweisen, die von ihrem Hauptabschnitt aus vorstehen. Eine solche Nase wird dann vom zweiten Stützabschnitt abgestützt, während der erste Stützabschnitt den Hauptabschnitt der Lamelle abstützt.

Der Stützabschnitt kann aber auch als Fixiereinrichtung für die Lamelle ausgebildet sein. Bei dieser Ausführungsform stützt sich der Lamellenrand bzw. Nasenrand nicht nur am Stützabschnitt ab, sondern wird an diesem zusätzlich fixiert, beispielsweise über Verklemmen, Verhaken, Verkleben etc..

Auch können zusätzliche Halterungen für die Lamellen, insbesondere an der Innenseite der Bodenwand, vorgesehen sein. Diese Halterungen, die sich mit den Lamellen geringfügig überlappen können, können Bohrungen aufweisen, durch die sich ein Haltestab erstreckt, der ebenfalls durch Bohrungen in den Lamellen verläuft.

Wie bereits erwähnt, ist das erfindungsgemäß ausgebildete Halteprofil an seinen Stirnseiten mit Verbindungsabschnitten zum Verbinden mit weiteren Halteprofilen versehen, wobei diese Verbindungsabschnitte gleichzeitig zum Verbinden mit querverlaufenden Seiten/Abschlußprofilen dienen können. Solche Verbindungsabschnitte für Seiten/Abschlußprofile können aber auch zusätzlich vorgesehen sein. Mehrere Halteprofile lassen sich besonders einfach verbinden, wenn die Verbindungsabschnitte zum Anstecken von weiteren Profilen ausgebildet sind.

Bei einer besonders bevorzugten Ausführungsform der Erfindung sind entsprechende Verbindungsabschnitte zum Verbinden mit weiteren Halteprofilen am Bodenwandrand des Halteprofils vorgesehen, während Verbindungsabschnitte zum Verbinden mit querverlaufenden Seiten/Abschlußprofilen an der Außenseite der Seitenwände des Halteprofils angeordnet sind. Die Abschlußprofile übergreifen dann mit Seitenflanschen die Seitenwände des Halteprofils, wobei die Verbindungsabschnitte beider Teile miteinander in Eingriff treten. Diese Verbindungsabschnitte und die Verbindungsabschnitte für die Halteprofile sind vorzugsweise als Nasen oder Rasthaken ausgebildet, die mit entsprechenden Nasen, Rasthaken oder Ausnehmungen der anderen Teile bei einem Zusammenstecken verrasten.

Um das Durchtrennen des Halteprofils zu erleichtern, ist dieses vorzugsweise auf seiner Außenseite in entsprechenden Abständen mit Markierungen, insbesondere Schneidfugen, versehen, an denen ein entsprechendes Trennwerkzeug angesetzt werden kann. Ferner weist das Halteprofil vorzugsweise mindestens einen heraustrennbaren Abschnitt in seinem Stegbereich auf, um einen seitlichen Abfluß vorzusehen.

Die Erfindung betrifft ferner eine modulare Halteprofileinheit, die sich aus mehreren Halteprofilen und ggf. Seiten/Abschlußprofilen der vorstehend beschriebenen Art zusammensetzt. Schließlich betrifft die Erfindung eine Abscheide-, Lichtreduzier- oder Strömungsleiteinrichtung, die eine solche modulare Halteprofileinheit aufweist.

Die Erfindung wird nachfolgend anhand eines Ausführungsbeispiels in Verbindung mit der Zeichnung im einzelnen erläutert. Es zeigen:
- Figur 1: eine Draufsicht eines Halteprofils;
- Figur 2: eine Seitenansicht des Halteprofils der Figur 1, in Figur 1 von unten gesehen;
- Figur 3: einen Schnitt entlang Linie C-C in Figur 1;
- Figur 4: einen Schnitt entlang Linie B-B in Figur 1;
- Figur 5: einen Schnitt entlang Linie A-A in Figur 1;
- Figur 6: eine Innenansicht des Halteprofils parallel zum Schnitt der Figur 5;
- Figur 7: eine Draufsicht des Halteprofils analog zu Figur 1 im verkleinerten Maßstab, wobei eingesetzte Lamellen und Abschlußprofile dargestellt sind;
- Figur 8: eine Darstellung einer Lamelle im Einbauzustand;
- Figur 9: eine Seitenansicht von zwei Halteprofilen, die ein Lamellenpaket halten, wobei die Lamellen nicht dargestellt sind;
- Figur 10: eine Seitenansicht von mehreren aneinandergesetzten Halteprofilen, die zusammen ein Lamellenpaket halten;
- Figur 11: eine Draufsicht der aneinandergesetzten Halteprofile mit eingesetzten Lamellen; und
- Figur 12: eine Ansicht entsprechend Figur 11 einer anderen Ausführungsform eines Halteprofils.

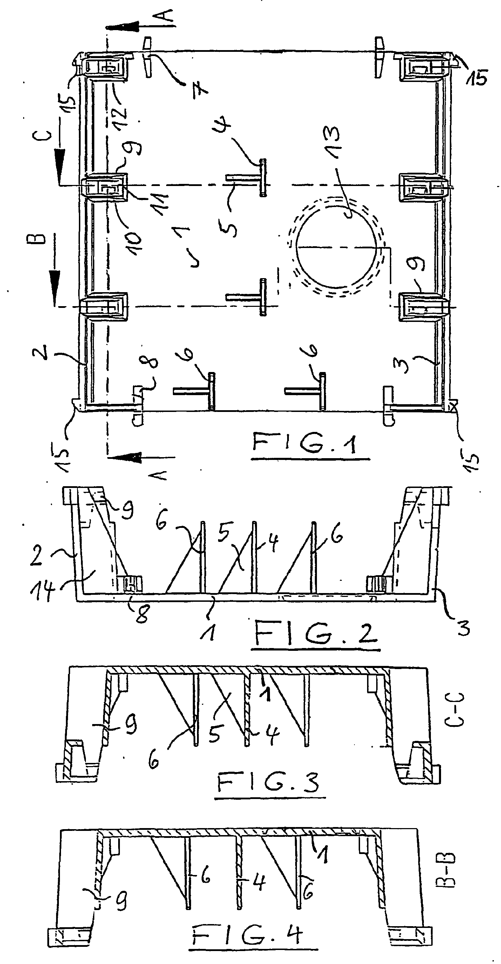

Das in den Figuren dargestellte Halteprofil wird zuerst anhand der Figuren 1 - 4 erläutert. Wie Figur 2 zeigt, ist das Halteprofil etwa U-förmig ausgebildet und besitzt eine Bodenwand 1 sowie eine Seitenwand 2 und eine Seitenwand 3. Figur 1 zeigt eine Draufsicht des Halteprofils mit Blick auf die Bodenwand 1. Auf der Innenseite der Seitenwand 2 und der Seitenwand 3 sind in gleichen Abständen Aufnahmeabschnitte 9 zum Fixieren von Lamellen 20 (beispielsweise in Figur 7 gezeigt) vorgesehen, die jeweils von zwei leicht schrägen Wänden 10 und einem dazwischen befindlichen Aufnahmespalt 11 gebildet werden. Die Lamellen sind in die Aufnahmeabschnitte senkrecht zur Blattebene einsteckbar, wobei entsprechende Nasen 12, die an einer Wand 10 angeordnet sind und nach innen in den Aufnahmespalt 11 vorstehen, beim Einstecken zur Seite bewegt werden und schließlich die Lamellen im eingesteckten Zustand festklemmen.

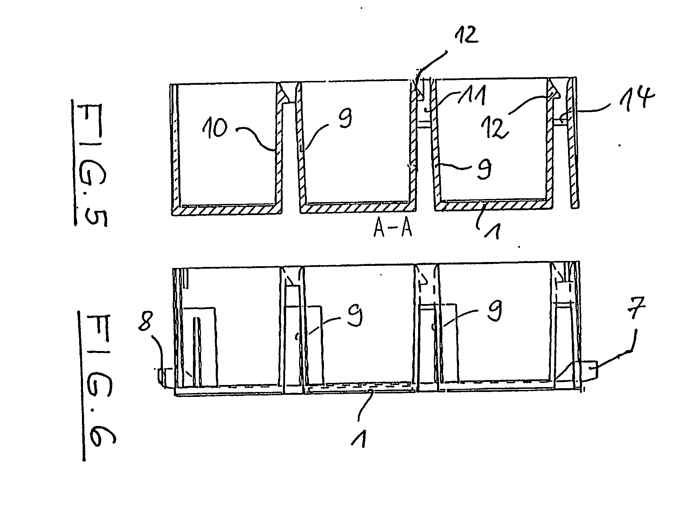

Figur 7 zeigt, daß die Lamellen 20 mit dem unteren Bereich ihrer Seitenränder in die in der Figur oberen und unteren Aufnahmeabschnitte 10 eingesteckt werden. Beim Einstecken können die Lamellen nur soweit eingeführt werden, daß zwischen der Innenseite der Bodenwand des Halteprofils und dem Lamellenende ein Freiraum verbleibt, der zum Abführen, Abfließen etc. benötigt wird. Dies läßt sich insbesondere Figur 5 entnehmen, die einen Schnitt entlang Linie A-A in Figur 1 zeigt. Man erkennt in Figur 5, daß sich der Aufnahmespalt 11 nicht bis zur Bodenwand 1 erstreckt, sondern eine Endwand in der Form eines Anschlages 14 aufweist, mit dem der Lamellenrand im eingesteckten Zustand in Kontakt tritt.

Die eingesteckten Lamellen 20 haben somit einen Abstand zur Innenfläche der Bodenwand 1. Um die eingesetzten Lamellen in ihrem mittleren Bereich abzustützen, weist das Halteprofil an der Innenseite der Bodenwand 1 einen nach innen vorstehenden Stützabschnitt zum Positionieren der Lamellen im Abstand von der Bodenwandinnenseite auf, der sich in Längsrichtung des Halteprofils erstreckt (in Figur 1 parallel zur Ebene A-A) und in der Form von einzelnen unterbrochenen Stegen 4 ausgebildet ist. Die Höhe dieser Stege 4 reicht exakt bis zur Oberseite der Anschläge 14, so dass sich die Ränder der eingesetzten Lamellen auf den Oberseiten der Stege 4 abstützen. Dies ist in Figur 7 gezeigt, wobei hier der Stützabschnitt in der Form eines durchlaufenden und nicht eines unterbrochenen Steges dargestellt ist. Die Funktionsweise ist jedoch die gleiche.

Die einzelnen Stege 4 besitzen seitliche Stützrippen 5, um eine Verformung in seitlicher Richtung zu verhindern.

In Figur 1 sind am linken bzw. unteren Rand zwei Stege 6 mit Rippen dargestellt, die die gleiche Aufgabe wie die Stege 4 haben und die eingesetzten Lamellen nicht mittig, sondern an zwei Punkten im Abstand von der Mitte abstützen.

Das Halteprofil der Figur 1 besitzt ferner einen Doppelrasthaken 8 und einen Klemmstutzen 7 parallel zu den Seitenwänden 2 und 3, welche zum Anstecken von weiteren Halteprofilen dienen. Mit den Doppelrasthaken 8 lassen sich entsprechende Rast- bzw. Klemmverbindungen herstellen, wobei die weiteren Halteprofile in einfacher Weise angesteckt werden können, so daß sich eine aus mehreren Halteprofilen zusammengesetzte Profilleiste ergibt. Eine Ausführung (wie in Figur 1) enthält einen Einfachrasthaken.

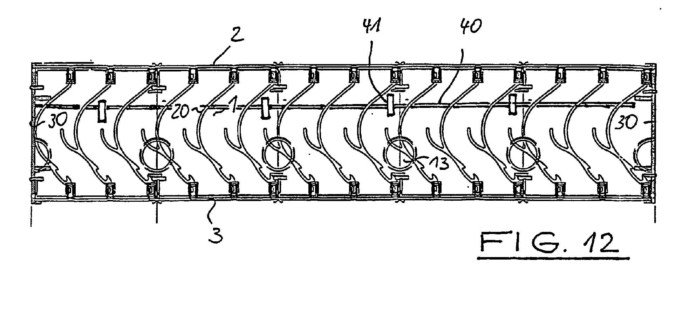

Ferner besitzt das in Figur 1 dargestellte Halteprofil am Rand der Seitenwände 2 und 3 weitere Verbindungsnasen 15, die zum Anstecken von querverlaufenden Seiten/Abschlußprofilen 30 dienen. Derartige Seiten/Abschlußprofile 30 sind in Figur 7 gezeigt. Die Abschlußprofile 30 werden auf das Halteprofil aufgesteckt, wobei Verbindungsnasen 32 der Seiten/Abschlußprofile mit den Verbindungsnasen 15 an den Flanschen des Halteprofils entsprechende Rastverbindungen bilden. Von den Innenseiten der Seiten/Abschlußprofile 30 stehen Flansche 31 nach innen vor, die im zusammengebauten Zustand die benachbarte Lamelle abstützen, wie in Figur 11 gezeigt.

Eine weitere Möglichkeit der Verbindung zwischen Halteprofil und Seiten/Abschlußprofil besteht in der Verbindung durch Schrauben.

Schließlich zeigt Figur 1 eine in der Bodenwand 1 des Halteprofils vorgesehene kreisförmige Einprägung 13, die dazu dient, eine entsprechende Abflußöffnung im Steg zu bilden, wenn das Material innerhalb der Einprägung entfernt wird.

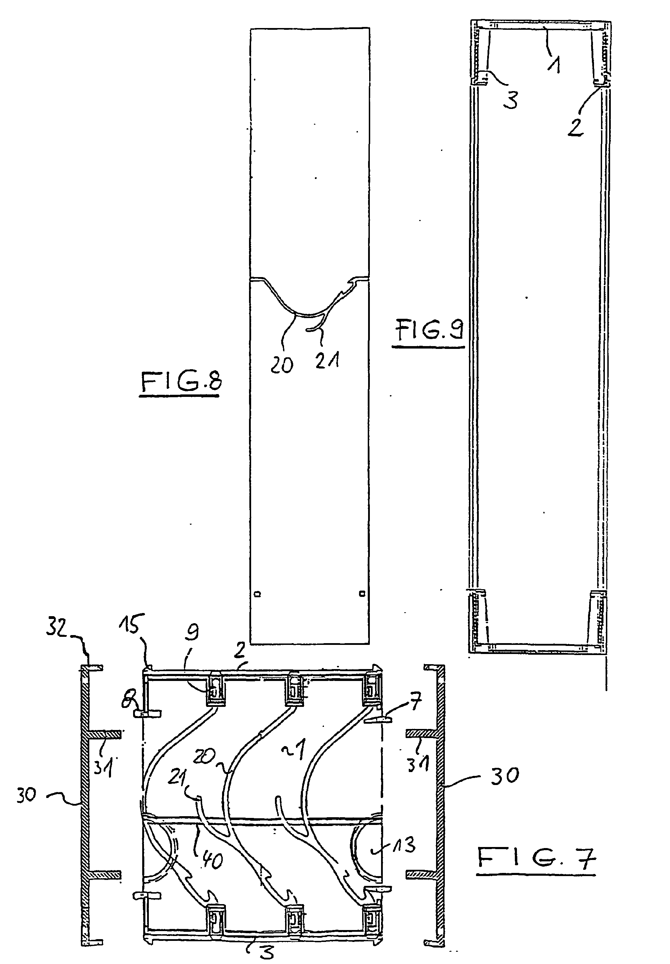

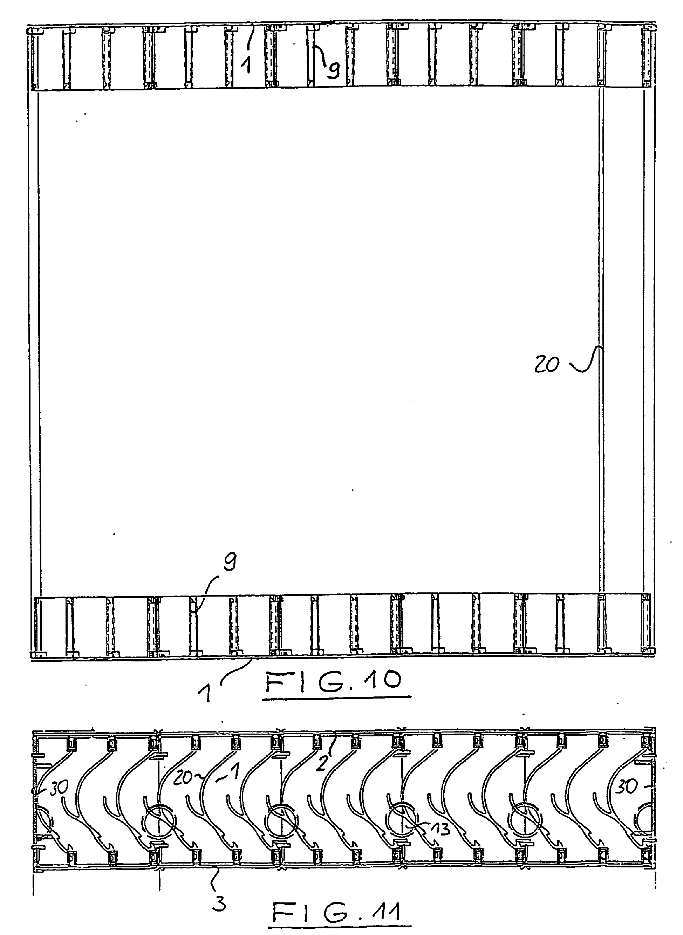

Wie Figur 7 zeigt, werden Lamellen 20, bei denen es sich im vorliegenden Fall um Tropfenabscheiderlamellen handelt, welche Fangnasen 21 aufweisen, mit ihren Enden in die entsprechenden Aufnahmeabschnitte 9 des Halteprofils eingesetzt, wobei sie sich am mittleren Stützabschnitt des Halteprofils abstützen. Die Lamellen werden an ihren beiden Stirnrändern in Halteprofile eingesteckt, so dasß sich die in den Figuren 8 und 9 gezeigte Anordnung ergibt, bei der die Lamellen an beiden seitlichen Stirnändern in Halteprofilen angeordnet sind. Die Figuren 10 und 11 zeigen, wie sich durch Aneinanderstecken von mehreren Halteprofilen entsprechende Lamellenpakete beliebiger Länge bilden lassen. Die Seiten/Abschlußprofile 30 schließen diese Pakete in seitliche Richtung ab.

Figur 12 zeigt eine Ansicht entsprechend Figur 11 einer weiteren Ausführungsform. Hierbei sind zusätzliche Halterungen 41 in der Form von von der Bodenwand 1 nach oben vorstehenden Nasen versehen, die Bohrungen aufweisen, durch die sich ein Metallstab 41 erstreckt, der sich ebenfalls durch Bohrungen in den Lamellen 20 erstreckt. Auf diese Weise werden die Lamellen 20 zusätzlich am Halteprofil fixiert.

## Patentansprüche

1. Halteprofil für Lamellen mit Abscheide-, Lichtreduzier-, Strömungsleit- u. dgl. Funktionen,
**dadurch gekennzeichnet, daß**
es im Schnitt allgemein U-förmig ausgebildet ist,
über seine Länge auf der Innenseite seiner Seitenwände (2,3) und/oder Bodenwand (1) Aufnahmeabschnitte (9) zum Fixieren der Lamellen (20) aufweist,
an seinen Stirnseiten mit Verbindungsabschnitten (7,8) zum Verbinden mit weiteren Halteprofilen versehen ist,
auf der Innenseite seiner Bodenwand (1) einen nach innen vorstehenden Stützabschnitt (4) zum Positionieren der Lamellen (20) im Abstand von der Bodenwandinnenseite aufweist und
zur Realisierung verschiedener Längen durch trennbar ist.

2. Halteprofil nach Anspruch 1, **dadurch gekennzeichnet, daß** die Aufnahmeabschnitte (9) in gleichen Abständen angeordnet sind.

3. Halteprofil nach einem der vorangehenden Ansprüche, **dadurch gekennzeichnet, daß** die Aufnahmeabschnitte (9) einen Anschlag (14) aufweisen, der eine Aufnahme der Lamellen (20) nur bis zu einer der Spitze des Stützabschnittes (4) entsprechenden Tiefe ermöglicht.

4. Halteprofil nach einem der vorangehenden Ansprüche, **dadurch gekennzeichnet, daß** die Aufnahmeabschnitte (9) je von zwei Schrägwänden (10) und einem dazwischen befindlichen Aufnahmespalt (11) gebildet werden.

5. Halteprofil nach einem der vorangehenden Ansprüche, **dadurch gekennzeichnet, daß** die Aufnahmeabschnitte (9) zum Einstecken der Lamellen (20) und zum Festklemmen derselben ausgebildet sind.

6. Halteprofil nach einem der vorangehenden Ansprüche, **dadurch gekennzeichnet, daß** der Stützabschnitt in der Form von einzelnen unterbrochenen Stegen (4) ausgebildet ist.

7. Halteprofil nach einem der Ansprüche 1 bis 5, **dadurch gekennzeichnet, daß** der Stützabschnitt als im wesentlichen in Längsrichtung durchlaufende Rippe (40) ausgebildet ist.

8. Halteprofil nach einem der vorangehenden Ansprüche, **dadurch gekennzeichnet, daß** es einen zweiten Stützabschnitt (6) im Abstand vom ersten Stützabschnitt (4) aufweist.

9. Halteprofil nach einem der vorangehenden Ansprüche, **dadurch gekennzeichnet, daß** der Stützabschnitt als Fixiereinrichtung für die Lamelle ausgebildet ist.

10. Halteprofil nach einem der vorangehenden Ansprüche, **dadurch gekennzeichnet, daß** seine Verbindungsabschnitte (8,9) zum Anstecken von weiteren Profilen ausgebildet sind.

11. Halteprofil nach einem der vorangehenden Ansprüche, **dadurch gekennzeichnet, daß** es Verbindungsabschnitte (15) zum Verbinden mit quer zum Halteprofil verlaufenden Seiten/Abschlußprofilen (30) aufweist.

12. Halteprofil nach einem der vorangehenden Ansprüche, **dadurch gekennzeichnet, daß** es Markierungen (Schneidfugen) zum Durchtrennen aufweist.

13. Halteprofil nach einem der vorangehenden Ansprüche, **dadurch gekennzeichnet, daß** es mindestens einen heraustrennbaren Abschnitt (13) als seitlichen Abfluß aufweist.

14. Halteprofil nach einem der vorangehenden Ansprüche, **dadurch gekennzeichnet, daß** es zusätzliche Halterungen (41) an der Bodenwand (1) aufweist, die Bohrungen besitzen, durch die sich ein Haltestab (40) erstreckt, der die Lamellen (20) durchläuft.

15. Modulare Halteprofileinheit, **dadurch gekennzeichnet, daß** sie aus mehreren Halteprofilen der Ansprüche 1 bis 14 zusammengesetzt ist.

16. Modulare Halteprofileinheit nach Anspruch 15, **dadurch gekennzeichnet, daß** sie aus mehreren Halteprofilen und Seiten/Abschlußprofilen zusammengesetzt ist.

17. Abscheideeinrichtung, **dadurch gekennzeichnet, daß** sie eine modulare Halteprofileinheit nach Anspruch 15 oder 16 aufweist.

18. Lichtreduzierungseinrichtung, **dadurch gekennzeichnet, daß** sie eine modulare Halteprofileinheit nach Anspruch 15 oder 16 aufweist.

19. Strömungsleiteinrichtung, **dadurch gekennzeichnet, daß** sie eine modulare Halteprofileinheit nach Anspruch 15 oder 16 aufweist.

## Claims

1. A holding profile for lamellae with separating, light-reducing, flow-conducting functions etc.,
**characterized in that**
it is generally U-shaped in cross section,
it hast over its length on the inner side of its side walls (2, 3) and/or bottom wall (1) accommodating sections (9) for the fixation of the lamellae (20),
it is provided at its front sides with connecting sections (7, 8) for the connection with further holding profiles,
it has on the inner side of its bottom wall (1) an inwardly projecting support section (4) for the positioning of the lamellae (20) spaced from the inner side of the bottom wall, and
it is adapted to be cut through for the realization of different lengths.

2. The holding profile according to claim 1, **characterized in that** the accommodating sections (9) are equidistantly spaced.

3. The holding profile according to one of the preceding claims, **characterized in that** the accommodating sections (9) have an abutment (14) enabling an accommodation of the lamellae (20) only to a depth corresponding to the tip of the support section.

4. The holding profile according to one of the preceding claims, **characterized in that** the accommodating sections (9) are respectively formed by two inclined walls (10) and an accommodating gap (11) formed therebetween.

5. The holding profile according to one of the preceding claims, **characterized in that** the accommodating sections (9) are formed for the inplugging of the lamellae (20) and for the clamping of the same.

6. The holding profile according to one of the preceding claims, **characterized in that** the support section is formed by individual interrupted lands (4).

7. The holding profile according to one of the claims 1 to 5, **characterized in that** the support section is formed as rib (40) substantially continuous in longitudinal direction.

8. The holding profile according to one of the preceding claims, **characterized in that** it includes a second support section (6) spaced from the first support section (4).

9. The holding profile according to one of the preceding claims, **characterized in that** the support section is formed as fixation means for the lamellae.

10. The holding profile according to one of the preceding claims, **characterized in that** its connecting sections (8, 9) are formed for the plugging of further profiles.

11. The holding profile according to one of the preceding claims, **characterized in that** it has connecting sections (15) for the connection with lateral/end profiles (30) transversely extending with respect to the holding profile.

12. The holding profile according to one of the preceding claims, **characterized in that** it has markings (cutting joints) for separating.

13. The holding profile according to one of the preceding claims, **characterized in that** it has at least one portion (13) adapted to be cut out as lateral outlet.

14. The holding profile according to one of the preceding claims, **characterized in that** it has additional holding means (41) at the bottom wall (1) which have bores through which a holding rod (40) extends which extends through the lamellae (20).

15. A modular holding profile unit, **characterized in that** it is combined by several holding profiles of the claims 1 to 14.

16. The modular holding profile unit according to claim 15, **characterized in that** it is combined by several holding profiles and lateral/end profiles.

17. A separating means, **characterized in that** it includes a modular holding profile unit according to claim 15 or 16.

18. A light-reducing means, **characterized in that** it includes a modular holding profile unit according to claim 15 or 16.

19. A flow-conducting means, **characterized in that** it includes a modular holding profile unit according to claim 15 or 16.

## Revendications

1. Profilé de retenue pour lamelles ayant des fonctions de séparation, de réduction de lumière, de conduction de flux et similaires, **caractérisé en ce que** :
il présente en coupe une forme générale en U,
il présente sur sa longueur, sur la face interne de ses parois latérales (2, 3) et/ou de sa paroi de fond (1), des sections réceptrices (9) pour fixer les lamelles (20),
il est pourvu, sur ses faces frontales, de sections de raccordement (7, 8) pour un raccordement avec d'autres profilés de retenue,
il présente, sur la face interne de sa paroi de fond (1), une section d'appui (4) dépassant vers l'intérieur pour positionner les lamelles (20) à distance de la face interne de la paroi de fond et est séparable pour la réalisation de différentes longueurs.

2. Profilé de retenue selon la revendication 1, **caractérisé en ce que** les sections réceptrices (9) sont agencées à distances égales.

3. Profilé de retenue selon l'une quelconque des revendications précédentes, **caractérisé en ce que** les sections réceptrices (9) présentent une butée (14) qui ne permet une réception des lamelles (20) que jusqu'à une profondeur correspondant au sommet de la section d'appui (4).

4. Profilé de retenue selon l'une quelconque des revendications précédentes, **caractérisé en ce que** les sections réceptrices (9) sont respectivement constituées de deux parois obliques (10) et d'une fente réceptrice (11) se trouvant entre elles.

5. Profilé de retenue selon l'une quelconque des revendications précédentes, **caractérisé en ce que** les sections réceptrices (9) sont conçues pour l'enfichage des lamelles (20) et pour leur blocage.

6. Profilé de retenue selon l'une quelconque des revendications précédentes, **caractérisé en ce que** la section d'appui se présente sous la forme de nervures individuelles interrompues (4).

7. Profilé de retenue selon l'une quelconque des revendications 1 à 5, **caractérisé en ce que** la section d'appui se présente sous la forme d'une nervure (40) sensiblement continue dans la direction longitudinale.

8. Profilé de retenue selon l'une quelconque des revendications précédentes, **caractérisé en ce qu'**il présente une seconde section d'appui (6) à distance de la première section d'appui (4).

9. Profilé de retenue selon l'une quelconque des revendications précédentes, **caractérisé en ce que** la section d'appui se présente sous la forme d'un dispositif de fixation pour la lamelle.

10. Profilé de retenue selon l'une quelconque des revendications précédentes, **caractérisé en ce que** ses sections de raccordement (8, 9) sont conçues pour fixer d'autres profilés.

11. Profilé de retenue selon l'une quelconque des revendications précédentes, **caractérisé en ce qu'**il présente des sections de raccordement (15) pour se raccorder à des profilés latéraux/terminaux (30) s'étendant transversalement au profilé de retenue.

12. Profilé de retenue selon l'une quelconque des revendications précédentes, **caractérisé en ce qu'**il présente des marquages (fentes de coupe) pour la séparation.

13. Profilé de retenue selon l'une quelconque des revendications précédentes, **caractérisé en ce qu'**il présente au moins une section séparable (13) comme décharge latérale.

14. Profilé de retenue selon l'une quelconque des revendications précédentes, **caractérisé en ce qu'**il présente sur la paroi du fond (1) des fixations supplémentaires (41), qui présentent des perçages à travers lesquels s'étend une tige de retenue (40) qui traverse les lamelles (20).

15. Unité modulaire de profilés de retenue, **caractérisée en ce qu'**elle se compose de plusieurs profilés de retenue selon les revendications 1 à 15.

16. Unité modulaire de profilés de retenue selon la revendication 15, **caractérisée en ce qu'**elle se compose de plusieurs profilés de retenue et de plusieurs profilés latéraux/terminaux.

17. Dispositif de séparation, **caractérisé en ce qu'**il présente une unité modulaire de profilés de retenue selon la revendication 16 ou 17.

18. Dispositif de réduction de lumière, **caractérisé en ce qu'**il présente une unité modulaire de profilés de retenue selon la revendication 15 ou 16.

19. Dispositif de conduction de flux, **caractérisé en ce qu'**il présente une unité modulaire de profilés de retenue selon la revendication 15 ou 16.
